# EUROPÄISCHE PATENTANMELDUNG

(11) **EP 1 154 649 A2**
(43) Veröffentlichungstag der Anmeldung: **14.11.2001**
(21) Anmeldenummer: 01890140.5
(22) Anmeldetag: 10.05.2001
(51) Int. Cl.: H04N 7/30, H04N 7/26

(54) **Verfahren und Einrichtung zur Übertragung von Bildfolgen**

(30) Priorität: 10.05.2000 AT 8152000
(71) Anmelder: Österreichisches Forschungszentrum Seibersdorf Ges.m.b.H., 1010 Wien (AT)
(72) Erfinder: Strobl, Berhard, Dipl. Ing., 2444 Seibersdorf (AT); Bischof, Horst, Dipl. Ing. Dr., 2444 Seibersdorf (AT); Veigl, Stefan, 2444 Seibersdorf (AT)
(74) Vertreter: Wildhack, Helmut, Dr. Dipl.-Ing.

(57) **Zusammenfassung**

Die Erfindung betrifft ein Verfahren und eine Einrichtung zur Übertragung von quasistatischen Bildfolgen. Erfindungsgemäß ist vorgesehen,
- dass mit dem Aufnahmegerät ein Referenzbild aufgenommen, gespeichert und zum Empfangsort übertragen wird,
- dass die Bildinhalte des gespeicherten Referenzbildes mit den Bildinhalten von zumindest einem nachfolgend aufgenommenen Folge-Bild verglichen werden, wobei das jeweils JPEG-kodierte Folge-Bild auf die Komprimierungsebene der DCT-Blöcke dekomprimiert und mit dem zuvor ebenfalls auf die Komprimierungs-Ebene der DCT-Blöcke dekomprimierten Referenz-Bild verglichen wird,
- dass mit den gegenüber dem Referenzbild als unterschiedlich bewerteten Bildbereichen des Folge-Bildes eine Differenzmaske erstellt wird und
- dass anstelle des jeweiligen gesamten Folge-Bildes lediglich die für dieses Folge-Bild erstellte Differenzmaske nach JPEG-Kodierung und Komprimierung zum Empfangsort übertragen wird.

## Beschreibung

Die Erfindung betrifft ein Verfahren gemäß dem Oberbegriff des Patentanspruches 1 sowie eine Einrichtung gemäß dem Oberbegriff des Patentanspruches 14.

Das erfindungsgemäße Verfahren und die erfindungsgemäße Einrichtung eignen sich zur Übertragung von Bildfolgen; besonders vorteilhaft eignet sich das Verfahren zur Übertragung von quasistatischen Bildfolgen, insbesondere von mit statischen Überwachungskameras aufgenommenen Bildfolgen. Bei diesem Einsatzzweck grenzen sich die zu erwartenden Bilder und deren Eigenschaften auf einen relativ kleinen Bereich ein, womit ein sehr spezialisierter und für die spezielle Wahl der Bilder optimierter Übertragungs-Algorithmus eingesetzt werden kann.

Die eingesetzten Aufnahmegeräte können beliebiger Bauart sein, vorteilhafterweise werden Videokameras eingesetzt. Die Aufnahmegeräte liefern JPEG-kodierte Bilder, die gleiches Format, in Hinblick auf Höhe, Breite und Farbtiefe aufweisen, und gleiche JPEG-Parameter bezüglich Codierung, Komprimierung und Quantisierung aufweisen. Es sollen relativ statische Bildinhalte vorliegen, insbesondere Bilder, die mit einer ruhenden bzw. unbewegten Kamera aufgenommen werden, wobei im Bild nur relativ wenige Bewegungen aufscheinen.

Die Übertragung der aufgenommenen Bilder erfolgt an einen Empfangsort bzw. eine Empfangseinrichtung, wobei eine Übertragung über ein Netzwerk mit moderater bis niedriger Bandbreite, z.B. Internet, serielle Direktverbindungen usw., möglich sein soll. Des weiteren soll eine Live-Anzeige zur Überwachung der aufgenommenen Bilder möglich sein, z.B., wenn die aufgenommenen Bilder einem Portier, einem Sicherheitsdienst od.dgl., dargestellt werden sollen. Es sollen eine Archivierung der Bilder zu einer späteren Darstellung und Überprüfung, ein Abspielen der archivierten Bildfolgen, insbesondere in Echtzeit, ein Rückwärtsspielen sowie ein beschleunigter Vor- und Rücklauf möglich sein.

Die im JPEG-Verfahren codierten Bilder sollen effizient bzw. schnell und mit einem hohen Faktor komprimierbar sein, wobei die Komprimierung so gestaltet sein soll, dass die Blder sofort verarbeitet und die Bilddaten weitergegeben werden können. Dies bedeutet, dass dafür nur Bilddaten der Vergangenheit, d.h. vorangehender Bilder, herangezogen werden können. Eine Zwischenspeicherung und das Senden von geblockten Sequenzen sind nicht vorgesehen; in diesem Fall würde das Verfahren der Forderung nach Live-Anzeigen nicht Rechnung tragen können. Infolgedessen muss das erfindungsgemäße Verfahren die Möglichkeit bieten, ein sogenanntes Streaming-Format einzusetzen, d.h. es können unter gewissen Voraussetzungen Bilder angezeigt werden, auch wenn der Anfang der Übertragung nicht mehr zur Verfügung steht oder wenn es während der Übertragung zu Verlusten von Daten gekommen ist. Des weiteren soll allerdings auch das Speichern einzelner Sequenzen und das zeitversetzte Abspielen mit variabler Geschwindigkeit möglich sein, welche Vorgaben an sich wieder eine abgeschlossene Sequenz mit Anfangsbild und Endbild voraussetzen. Des weiteren soll bei archivierten Bildern eine spezielle Bildsuche möglich werden.

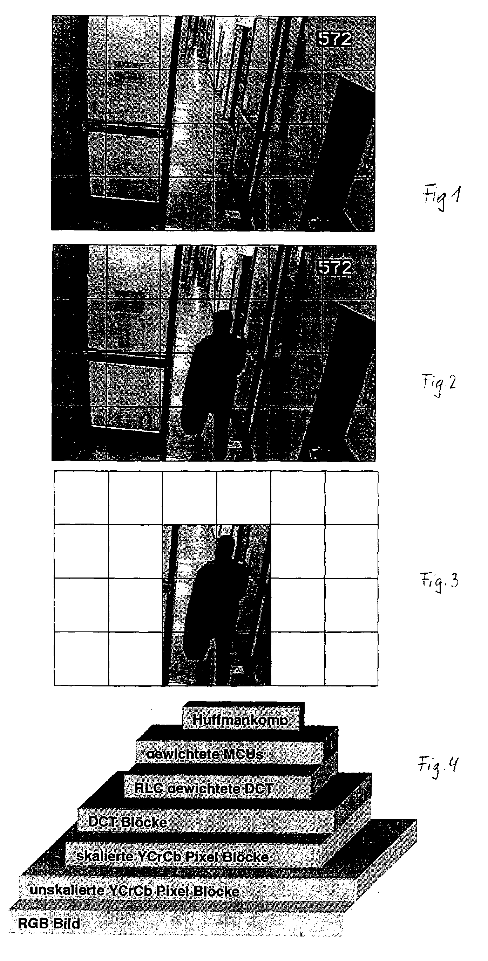

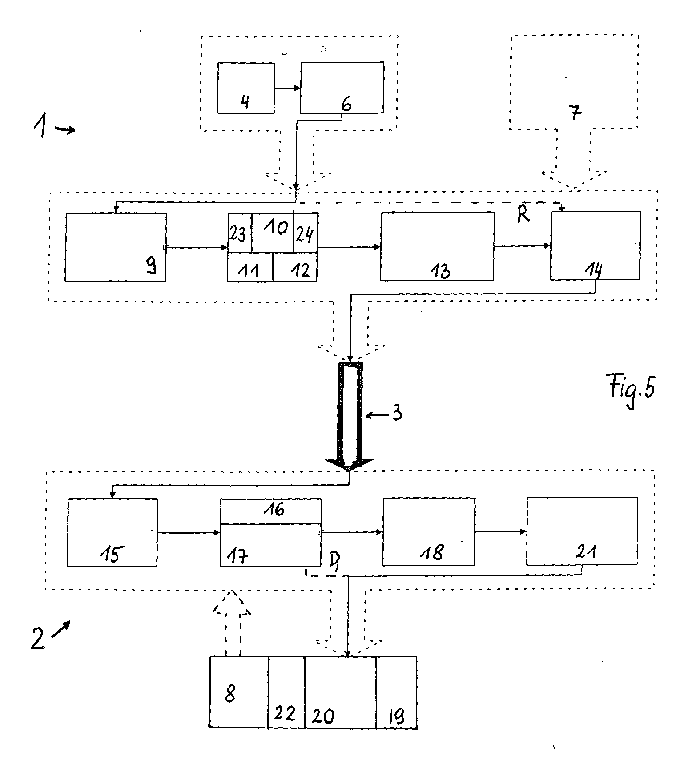

Es ist bekannt, für den Fall, dass zeitlich aufeinanderfolgende Bilder eine starke Korrelation zeigen, nur die Änderungen der Bildinhalte zu speichern bzw. aufzuzeichnen. Derartige Verfahren werden selektive Blockdifferenz-Verfahren genannt. Bei derartigen Verfahren wird zuerst ein Referenzbild aufgenommen und gespeichert. Dieses Referenzbild wird, wie in Fig. 1 dargestellt, mit einem Raster in gleich große Blöcke unterteilt. Folge-Bilder werden mit demselben Raster in gleich große Blöcke unterteilt, wie dies in Fig. 2 dargestellt ist. Des weiteren werden die einzelnen, einander entsprechenden Blöcke des Referenzbildes und des Folge-Bildes verglichen; hiefür muss ein geeigneter Vergleichsalgorithmus gefunden bzw. entwickelt werden. Es erfolgt ein blockweiser Vergleich der beiden Bilder und sofern ein relevanter Unterschied von einander entsprechenden Bildblöcken festgestellt wird, wird der Inhalt des bzw. der jeweiligen Blöcke in eine Bild- bzw. Differenzmaske kopiert, wie sie in Fig. 3 dargestellt ist. In Fig. 3 sind lediglich diejenigen Blöcke des Folge-Bildes in der Differenzmaske enthalten, deren Bildinhalte gegenüber dem Referenzbild als ausreichend unterschiedlich bewertet wurden. Sobald sämtliche Blöcke der beiden Bilder miteinander verglichen wurden, wird die Differenzmaske gespeichert und übertragen. Es werden damit Bilddaten eingespart; sofern keine Unterschiede zwischen dem Referenzbild und dem Folgebild gefunden bzw. ermittelt werden, können nahezu 100% der Bilddaten eingespart werden. Es sind lediglich die Daten betreffend den Overhead zu berücksichtigen, der durch das Protokoll vorgegeben ist, welche Daten in entsprechender Form weitergegeben werden müssen. Zur Wiedergabe des Folgebildes am Empfangsort ist es lediglich erforderlich, das zuvor übertragene Referenzbild mit der jeweiligen Differenzmaske zu überlagern und die mit der Differenzmaske übertragenen Blöcke anstelle der vorher übertragenen Blöcke des Referenzbildes zu setzen, womit das aktuelle Folge-Bild zur Gänze dargestellt werden kann. Diese Vorgangsweise ist schnell, einfach und benötigt nur relativ geringe Rechenleistung.

Dem Vergleichsalgorithmus, mit dem das Referenzbild mit dem Folgebild verglichen wird, kommt spezielle Bedeutung zu, da er zur Effizienz und Brauchbarkeit wesentlich beiträgt. An diese Vergleichsroutine werden konkrete Forderungen gestellt, nämlich, es muss ein schneller und effizienter Vergleich zweier Blöcke möglich sein; des weiteren muss ein sicheres Erkennen von relevanten bzw. als wichtig betrachteten Unterschieden möglich sein; es soll das Hintergrund- und Kamerarauschen unterdrückt werden und letztlich soll der Vergleich individuell auf unterschiedliche Bedingungen einstellbar sein.

Um zwei Bildbereiche bzw. Blöcke miteinander vergleichen zu können, müssen die Bildinformationen bzw. Bilddaten der Blöcke in gleicher unkomprimierter Form vorliegen. Bei einer verlustbehafteten Kompression von Bilddaten, wie dies z.B. bei JPEG-Bildern der Fall ist, ist darauf zu achten, dass trotz der fehlenden Information noch ein guter Vergleich möglich ist. Dies gilt insbesondere dann, wenn durch das Kompressionsverfahren nicht festgelegt ist, wie die fehlende Information oder fehlende Teilinformationen zu behandeln sind. Das JPEG-Verfahren an sich bietet zwar mögliche Lösungen an, wie mit Bildrändern zu verfahren ist, sieht aber keine konkrete Vorgangsweise vor, da die Behandlung von Bildrändern für die visuelle Darstellung von Bildern zumeist irrelevant ist.

Des weiteren schreibt das JPEG-Verfahren nicht vor, ob die Bilder bzw. die Blöcke innerhalb oder außerhalb der Vergleichsroutine dekomprimiert werden. Je nach Art der Komprimierung kann es notwendig sein, das gesamte Bild auf einmal zu dekomprimieren oder, um Speicherplatz zu sparen wenn es der Effizienz nicht abträglich ist, nur Teile des Bildes zu dekomprimieren. Des weiteren spielt es auch eine Rolle, wie und wann die Differenzmaske zu komprimieren ist.

Des weiteren ist zu überlegen, wie mit den aufgenommenen Referenzbildern zu verfahren ist. Die Speicherung eines einzigen Referenzbildes bringt die Nachteile, dass bei einer Beschädigung des Referenzbildes bzw. wenn dessen Übertragung fehlerhaft ist, sämtliche übertragene Differenzmasken unbrauchbar werden, da das Vorhandensein eines Referenzbildes die Basis für die Verwendung von Differenzmasken darstellt. Eine Live-Übertragung im Streaming-Verfahren wird dadurch praktisch unmöglich. Wenn permanente Änderungen des Bildinhaltes der aufgenommenen Bilder stattfinden, die diesem sich verändernden Bildinhalt immer wieder neu in die Differenzmasken einkodiert werden und der Vorteil einer nahezu leeren Differenzmaske geht verloren. Wurde ein schlechtes Referenzbild gewählt oder hat sich der Kamerablickwinkel um auch nur wenige Grade verschoben, so wird jedes Folgebild zur Gänze in die Differenzmaske übertragen bzw. einkodiert, was zur Folge hat, dass sämtliche Bildinformationen und Protokolldaten für das geänderte Folgebild gespeichert werden müssen. In diesem Fall ist der Vorteil eines rein statischen Referenzbildes nicht mehr gegeben. Bei der Übertragung von quasistatischen Bildfolgen, vorzugsweise von mittels Überwachungskameras aufgenommenen quasistatischen Bildfolgen, empfiehlt es sich, nach Aufnahme einer fixen oder variablen Zahl von Folgebildern ein neues Referenzbild zu speichern bzw. zu übertragen. Die Zahl der zwischen zwei Referenzbildern übertragenen Differenzmasken bzw. die Vorgabe der Parameter für das Wiederabsenden eines Referenzbildes wird vom praktischen Fall abhängen.

Da die Kodierung in Echtzeit erfolgen soll, ist es nicht möglich, auf sehr komplexe Vergleichsalgorithmen zurückzugreifen. Es kommen daher keine variablen Blockgrößen oder Mustererkennungen mit Bewegungsvektoren, wie dies teilweise bei anderen Videokomprimierungsverfahren, z.B. MPEG, vorgesehen wird, in Frage. Diese Verfahren wurden für allgemeine Video-Übertragungsverfahren mit Eingangsbildern entwickelt und benötigen entsprechend viel Rechenleistung und Zeit zum Komprimieren. JVS-Verfahren besitzen die oben erwähnten Eigenschaften und sind auf statische Aufnahmegeräte bzw. statische Referenzbilder mit wenig Bewegungen im Bild abgestellt und optimal leistungsfähig.

Da es sich bei der erfindungsgemäßen Vorgangsweise um ein Live-Streamingverfahren handeln soll, sind Vorgriffe in die Zukunft oder das Abarbeiten ganzer Bildsequenzen, wie dies bei anderen Verfahren, z.B. MPEG 2, Predict-Frames, vorgesehen ist, nicht möglich. Die strenge Richtung des Zeitpfeils und das sehr kleine Zeitfenster, das genau die Länge eines Bildes beträgt, schränken die Eignung des erfindungsgemäßen Verfahrens als Archivformat ein. Diesem Umstand wird jedoch dadurch begegnet, dass zusätzliche Status-, Navigations- und Synchronisationsblöcke eingefügt und gespeichert werden können.

Die sogenannte selektive Blockdifferenz wird zumeist auf zwei sehr unterschiedlichen Gebieten angewendet, nämlich bei der komplexen Videokompression mit sehr aufwendigen Vergleichen und Suchen nach Bewegungsvektoren für möglichst allgemein gehaltene Videobilder bzw. Eingangsbilder mit sehr hohem Rechenaufwand, z.B. bei MPEG-Verfahren, und bei relativ einfachen Projekten bzw. bei der experimentellen Forschung, wobei ein einfacher Vergleich einzelner Pixelblöcke oder von deren Helligkeitsmittel, vorgenommen wird.

Das erfindungsgemäße Verfahren ist zwischen diesen beiden Extrema einzuordnen; einerseits soll es hohe Kompressionsraten, ähnlich den komplexen Verfahren, ermöglichen, anderseits soll dies mit möglichst geringem Rechen- bzw. Zeitaufwand möglich werden. Dies kann durch Berücksichtigung bzw. Kombination der beiden folgenden Voraussetzungen erreicht werden, nämlich durch eine relativ starke Spezialisierung auf großteils statische Bilder, wie sie insbesondere bei Überwachungskameras vorliegen, und des weiteren durch eine Optimierung des Algorithmus in Hinblick auf das Bildformat. Der Vergleichsalgorithmus und dessen Parameter sind unter Berücksichtigung der JPEG-Bildkomprimierung zu wählen.

Vorteilhaft für die erfindungsgemäße Vorgangsweise bzw. für die erfindungsgemäße Einrichtung ist es demzufolge, wenn die Referenzbilder und die Folgebilder von nicht beweglichen Überwachungskameras stammen, womit erreicht wird, dass die entsprechenden Kompressionsalgorithmen erheblich vereinfacht werden. Ein optimales Referenzbild wird z.B. dann erhalten, wenn sich niemand in dem überwachten Raum befindet bzw. in diesem Raum keine Bewegung stattfindet. Eine weitere Vereinfachung kann dann erreicht werden, wenn es längere Zeitspannen gibt, in denen sich keine Personen in dem aufzunehmenden Raum befinden bzw. in dem Bildbereich eintreten, wie es z.B. in Nachtstunden, bei Zutrittsbeschränkungen usw. der Fall ist. Während dieser Zeiten kann das aktuelle Bild als optimales Referenzbild dienen und es braucht somit immer nur die Information festgestellt und übertragen werden, dass die Differenzmaske leer ist, sodass über einen langen Zeitraum hinweg nur sehr kleine Datenmengen zu übertragen sind. Wenn sich Personen in dem Raum befinden oder andere Bewegungen stattfinden, ist es von Vorteil, wenn diese Personen und die Bewegungen nur auf einen engen Raum begrenzt sind, was zur Folge hat, dass die übertragene Differenzmaske größtenteils leer ist. Es könnte auch vorausgesetzt werden, dass der Hintergrund statisch und bewegungsfrei ist, sodass lediglich Bewegungsvektoren für Personen und bewegte Gegenstände beachtlich werden. Da sich derartige Bewegungsvektoren jedoch nur auf relativ kleine Teilbereiche des Bildes beziehen, bringen sie in Anbetracht des drastisch steigenden Rechenaufwandes keine signifikante Verbesserung der Datenrate, sodass von der Ermittlung von Bewegungsvektoren bei der erfindungsgemäßen Vorgangsweise abgesehen wird.

Die erfindungsgemäße Vorgangsweise und die erfindungsgemäße Einrichtung zielen somit darauf ab, dass ein Referenzbild aufgenommen und übertragen und nach einer bestimmten Anzahl von übertragenen Differenzmasken oder bei einer hohen Auslastung einer Differenzmaske, d.h. bei einer relativ großen Anzahl von als unterschiedlich bewerteten Blöcken, durch ein neues Referenzbild ersetzt wird; Bewegungsvektoren werden nicht erstellt.

Um bei dem eingangs genannten Verfahren eine rasche Datenübertragung mit wenig Rechenaufwand zu erreichen, sind die im Kennzeichen des Anspruches 1 angeführten Merkmale vorgesehen. Eine erfindungsgemäße Einrichtung ist mit den im Kennzeichen des Anspruches 14 enthaltenen Merkmalen charakterisiert. Erfindungsgemäß wird die Anzahl der zu übertragenden Bilddaten reduziert, sodass bei gleichbleibender Übertragungskapazität eine größere Anzahl von Informationen übertragen werden kann.

Die Referenzbilder und die Folge-Bilder werden vom Aufnahmegerät im JPEG-Format kodiert und komprimiert geliefert; insbesondere werden bei der erfindungsgemäßen Vorgangsweise Huffman-komprimierte Bilder eingesetzt. Derartige Bilder werden von den üblichen Videokameras geliefert. Diese Bilder liegen im YCrCb-Farbraum.

Bei der JPEG-Komprimierung wird ein mit einer Videokamera aufgenommenes Bild zuerst vom RGB-Farbraum in den YCrCb-Farbraum umgerechnet, wobei der YCrCb-Farbraum einen Luminenzkanal und zwei Chrominanzkanäle umfasst. Danach werden die Chrominanzebenen bzw. -kanäle skaliert und dabei vorteilhafterweise um den Faktor 2 verkleinert. Diese Daten entsprechen etwa jenen Daten, die auch das menschliche Auge verarbeiten kann.

In Fig. 4 ist als unterste Ebene der RGB-Farbraum dargestellt; oberhalb desselben ist die Ebene der unskalierten YCrCb-Pixelblöcke dargestellt, die durch eine reine Transformation erreicht wird. Bei der weiteren Komprimierung in skalierte YCrCb-Pixelblöcke treten Datenverluste ein. In dieser Ebene, d.h. eine Luminanzebene und zwei Chrominanzebenen, wird das Bild in Blöcke von 8 x 8 Pixel zerlegt.

Auf die skalierten YCrCb-Pixelblöcke wird eine diskrete Cosinus-Transformation (DCT) angewendet, welche diese Pixelblöcke in DCT-Blöcke im Frequenzraum abbildet bzw. transformiert.

Die DCT-Koeffizienten werden gewichtet, wobei die niedrigeren Frequenzen mehr Gewicht haben als die hohen Frequenzen. Durch diese Gewichtung verschwinden einige, vor allem hohe, Frequenzen; dies bedeutet, dass hier nicht eine reine Transformation, sondern eine Komprimierung mit Datenverlust stattfindet. Es entsteht eine relativ schwach besetzte Matrix, die durch Run Length Coding sehr kompakt dargestellt werden kann und in Fig. 4 die Ebene der RLC gewichteten DCT-Blöcke darstellt.

Die RLC gewichteten DCT-Blöcke werden zu Minimum-Code Units (MCU) kombiniert, wobei jede gewichtete MCU vorteilhafterweise zweimal zwei Luminanzblöcke und je einen Chrominanzblock enthält, insbesondere in Hinblick auf die Skalierung der Chrominazebenen mit dem Faktor 2.

Die MCUs werden komprimiert, insbesondere Huffman- komprimiert, wobei in jeden JPEG-Header eine fixe Huffman-Tabelle eingefügt werden kann bzw. in der jeweiligen JPEG-Datei gespeichert wird. In den MCU-Matrizen sind alle Bilddaten enthalten, die in der JPEG-Datei gespeichert sind. Alle weiteren Dekodierungs-Schritte bringen weder mehr Qualität oder Information, sondern formen die Daten lediglich in ein allgemein verarbeitbares und von RGB-Monitoren darstellbares Format um.

Da die Gewichtstabelle für alle aufgenommenen Bilder gleich ist (fixe Einstellung in der Kamera bzw. JPEG-Konverter), ist erfindungsgemäß vorgesehen, die kodierten und komprimierten Bilddaten nur auf die Ebene der gewichteten MCUs bzw. die Ebene der RCL gewichteten DCT-Blöcke zu dekomprimieren. Es ist erfindungsgemäß somit vorgesehen, den Vergleich zwischen Referenzbild und den Folge-Bildern auf der Komprimierungsebene der DCT-Blöcke, vorzugsweise der gewichteten DCT-Blöcke, vorzunehmen und nicht auf einer darunterliegenden Ebene, z.B. auf der Ebene der RGB-Bilder, womit beträchtlicher Rechenaufwand gespart wird.

Das erfindungsgemäße Verfahren sieht vor, dass bei dem Vergleich zwischen dem Referenzbild und den jeweiligen Folge-Bildern die gewichteten DCT-Koeffizienten jedes Blockes oder jeder MCU miteinander verglichen werden. Dabei kann vorteilhafterweise vorgesehen sein, dass - abhängig von der jeweils gewählten Vergleichsfunktion - bei dem Vergleich des Referenzbildes mit einem Folge-Bild die Differenz, die Summe oder eine andere Funktion der Koeffizienten der DCT-Blöcke oder der MCU des Referenzbildes und des jeweiligen Folge-Bildes ermittelt werden. Vorteilhafterweise wird die Differenz der Koeffizienten nochmals gewichtet. Vorteilhaft ist es, wenn die erhaltenen Differenzen gewichtet werden, wobei niedrige Frequenzen vorzugsweise höheres Gewicht erhalten und/oder Luminanzkanäle höher bewertet bzw. gewichtet werden als Chrominanzkanäle und/oder hohe Chrominanzfrequenzen unberücksichtigt bleiben. Zur Anpassung an unterschiedliche Gegebenheiten ist erfindungsgemäß vorgesehen, dass die Summe der gewichteten Differenzen zumindest eines DCT-Blockes oder einer MCU mit einem vorgegebenen oder insbesondere von der gewünschten Bildqualität oder Übertragungskapazität abhängigen Grenzwert verglichen wird.

Um die Vergleiche effizient durchführen zu können, ist erfindungsgemäß vorgesehen, dass der Vergleich zwischen Referenzbild und dem jeweiligen Folge-Bild in Echtzeit, d.h. in der zwischen der Aufnahme eines Bildes und Absenden der zugehörigen Differenzmaske liegenden Zeitspanne, vorteilhafterweise während einer Zwischenspeicherung des als nächstes aufgenommenen Folge-Bildes erfolgt und dass auch die Erstellung der Differenzmasken in Echtzeit erfolgt. Um die Vergleiche effizient durchführen zu können, ist erfindungsgemäß vorgesehen, dass die Differenzmaske in einer Größe von einer Vielzahl von DCT-Blöcken erstellt wird, insbesondere die Bildbreite und die Bildhöhe der Differenzmaske ein Vielfaches der Breite und Höhe eines DCT-Blockes beträgt. Sofern diese Merkmale nicht erfüllt sind, kann das entsprechende Bild entweder zugeschnitten oder erweitert werden.

Man erhält bei der erfindungsgemäßen Vorgangsweise einen effektiven, raschen Komprimier- und Dekomprimierungsalgorithmus, der geringsten Rechenaufwand erfordert.

Die JPEG-kodierten Referenzbilder bzw. Folgebilder werden somit auf die Ebene der gewichteten DCT-Blöcke oder MCUs dekomprimiert. Der Unterschied zwischen einer Blockdarstellung und einer MCU-Darstellung besteht lediglich in der Art, wie die Daten interpretiert werden und wie die einzelnen Daten zueinander in Verbindung stehen. In der Praxis besteht zwischen diesen beiden Darstellungsarten kein Unterschied, da es sich nicht um eine Umrechnung der Daten, sondern nur um eine andere Betrachtungsweise derselben Daten handelt; es wird keine zusätzliche Rechenarbeit erforderlich, um mit einer Darstellung der Daten in MCU-Form oder in Block-Form zu rechnen.

Die einzelnen MCUs bzw. DCT-Blöcke des Referenzbildes und der Folge-Bilder werden miteinander verglichen, insbesondere unter Anwendung einer Vergleichsfunktion auf die Koeffizienten der DCT-Blöcke oder der MCUs und entsprechend dem Ausgang des Vergleiches bzw. der Beurteilung der ermittelten Unterschiede unter Zuhilfenahme eines Vergleichskriteriums werden gegenüber dem Referenzbild unterschiedliche Blöcke in die Differenzmaske eingetragen. Dabei ist vorgesehen, dass die Differenzmaske durch selektive Blockdifferenz des Referenzbildes und des jeweiligen nachfolgend aufgenommenen Folge-Bildes erstellt wird, indem einander, insbesondere lagemäßig und/oder bildstrukturmäßig, entsprechende Bildbereiche bzw. -blöcke des Referenzbildes und des Folge-Bildes verglichen werden und nur diejenigen Blöcke des Folge-Bildes in die Differenzmaske übernommen werden, in denen die Abweichung bzw. der Unterschied der Bildmerkmale gegenüber den Bildmerkmalen in den Blöcken des Referenzbildes als signifikant beurteilt wird.

In Folge wird die Differenzmaske komprimiert, insbesondere Huffmann-komprimiert und zum Empfangsort übertragen.

Erfindungsgemäß ist vorgesehen, dass am Empfangsort die Referenzbilder und die Differenzmasken auf die Komprimierungsebene der vorzugsweise gewichteten DCT-Blöcke dekomprimiert werden und auf dieser Komprimierungsebene die entsprechenden DCT-Blöcke oder MCUs des Referenzbildes durch die DCT-Blöcke oder MCUs der Differenzmaske ersetzt werden.

Für die Speicherung der Daten der Differenzmaske und des Referenzbildes bzw. um diese übertragen zu können, sind sie noch in ein geeignetes Format zu bringen, das durch das JVS-Protokoll vorgegeben wird.

Sämtliche Verfahrensschritte, isnbesondere die Bildaufnahme, die Bildverarbeitung, der Bildvergleich sowie die Komprimierung und die Übertragung werden mit entsprechenden Steuereinheiten kontrolliert bzw. abgewickelt. Derartige Steuereinheiten sind sowohl für die Aufnahme- und Übertragungseinrichtung als auch für die Wiedergabe- bzw. Empfangseinrichtung vorgesehen.

Sowohl am Empfangsort, als auch am Aufnahmeort kann vorgesehen sein, dass das mit dem Referenzbild und mit den DCT-Böcken bzw. MCUs der Differenzmaske erstellte Bild zur Anzeige gebracht wird oder komprimiert, vorzugsweise Huffmann-komprimiert, und gegebenenfalls mit einem JPEG-Header versehen abgespeichert wird.

In Hinblick auf die erforderliche Schnelligkeit der Datenverarbeitung und Übertragung ist es vorteilhaft, wenn der Vergleich zwischen Referenzbild und dem jeweiligen Folge-Bild in Echtzeit, d.h. in der zwischen der Aufnahme eines Bildes und Absenden der zugehörigen Differenzmaske liegenden Zeitspanne, vorteilhafterweise während einer Zwischenspeicherung des als nächstes aufgenommenen Folge-Bildes erfolgt und dass auch die Erstellung der Differenzmasken in Echtzeit erfolgt.

Bei der Dekomprimierung der vom Aufnahmeort an den Empfangsort übertragenen Bilddaten werden, entsprechend dem vorgesehenen Protokoll, die Bilddaten von den restlichen Informationen getrennt. Die Differenzmasken werden auf die Ebenen der gewichteten DCT-Blöcke dekomprimiert und treten anstelle der DCT-Blöcke eines übertragenen, insbesondere des zuletzt übertragenen Referenzbildes. Das damit neu zusammengesetzte und aktualisierte Bild, das den letzten Zustand des aufgenommenen Bildbereiches darstellt, kann zur Anzeige gebracht werden oder Huffmann-kodiert und mit einem JPEG-Header versehen, abgespeichert werden.

Die übergeordneten Funktionen werden von Steuereinheiten erbracht, so wie diese im Kennzeichen des Patentanspruches 17 charakterisiert sind.

Im folgenden wird die Erfindung anhand eines schematischen Schaubildes näher erläutert.

Mit 1 ist allgemein eine Einrichtung zur Aufnahme und zur Übertragung von Bildfolgen bezeichnet, die sich am Aufnahmeort befindet. Mit 2 ist allgemein eine Empfangs-bzw. Wiedergabeeinheit bezeichnet, die sich am Empfangsort befindet. Zwischen dem Aufnahmeort und dem Empfangsort werden die Daten über entsprechende Medien 3, z.B. Leitungen, Lichtleiter, Funk od.dgl., übertragen.

Die Aufnahmeeinrichtung bzw. die Einrichtung zur Übertragung umfaßt ein Aufnahmegerät 4, vorzugsweise eine Videokamera, mit einer angeschlossenen Codier- und Komprimiereinheit 6, in der die aufgenommenen analogen Bilder im JPEG-Format kodiert und komprimiert, insbesondere Huffmann-komprimiert, werden.

Eine Steuereinheit 7 steuert die Einrichtung 1 und sorgt für die einzelnen Kodierungsund Komprimierungsabläufte, für die Bildaufnahme- und -übertragung, die Synchronisation und für alle vorzunehmenden Rechen- und Übertragungsschritte.

Vorab wird mit dem Aufnahmegerät 4 ein Referenzbild aufgenommen und über den Übertragungsweg R einer Protokolleinheit 14 zugeführt und von dieser direkt der Übertragungsstrecke 3 aufgegeben. Dasselbe Bild wird auch einem Decoder 9 zugeführt, in dem dieses Bild auf die Komprimierungsebene der, vorzugsweise gewichteten, DCT-Blöcke dekomprimiert wird. In einem Zwischenspeicher 11 wird das dekomprimierte Referenzbild gespeichert. Diese Zwischenspeicherung erfolgt solange, bis das Referenzbild durch ein neues Referenzbild ersetzt wird; diesen Zeitpunkt gibt die Steuereinheit 7 vor.

Die im folgenden mit dem Aufnahmegerät 4 aufgenommenen Folge-Bilder werden ebenfalls dem Decoder 9 zugeführt und auf die Komprimierungsebene der, vorzugsweise gewichteten, DCT-Blöcke dekomprimiert.

In einem dem Decoder 9 nachgeschalteten Komparator 10 erfolgt ein Vergleich der Folge-Bilder mit dem zwischengespeicherten Referenzbild. Dabei werden gegenüber dem Referenzbild als unterschiedlich bewertete Bildbereiche bzw. DCT-Blöcke oder MCUs des jeweiligen Folge-Bildes in eine Differenzmaske eingeschrieben, die von einem Differenzmaskenbildner 12 generiert wird. Diese Differenzmaske wird einer Kodierungs- und Komprimierungseinheit 13 zugeführt, in der die Differenzmaske JPEG-kodiert und komprimiert, vorzugsweise Huffman-komprimiert, wird Die Protokolleinheit 14 versieht die Bilddaten der Differenzmaske mit den entsprechenden Headem und Protokollierungsdaten, so wie diese zur Übertragung erforderlich sind. Von der Protokolleinheit 14 wird sodann diese Differenzmaske an den Empfangsort bzw. an die Empfangseinheit 2 übertragen.

Die Empfangseinheit 2 weist eine Steuereinheit 8 auf, mit der die einzelnen Komprimierungs- und Dekomprimierungsschritte und die zeitrichtige Abwicklung bzw. die Protokollhandhabung usw. vorgenommen werden. Die Protokolleinheit 15 am Empfangsort erkennt die entsprechenden Protokolle und sorgt für eine entsprechende Weiterverarbeitung der eintreffenden Bilddaten.

Eintreffende Referenzbilder werden auf die Ebene der vorzugsweise gewichteten DCT-Blöcke in einem Decoder 16 dekomprimiert und in einem Zwischenspeicher 17 gespeichert, bis sie durch ein neues Referenzbild ersetzt werden. In einer Substitutionseinheit 18 werden die eintreffenden Differenzmasken an entsprechender Stelle des Referenzbildes eingesetzt bzw. die entsprechenden Bildblöcke des Referenzbildes ersetzt, nachdem die eintreffenden Differenzmasken in dem Decoder 16 ebenfalls auf die Komprimierungsebene der vorzugsweise gewichteten DCT-Blöcke dekomprimiert wurden.

In dem Komparator 10 ist ein Speicher 23 vorgesehen, in dem die Vergleichsfunktion abgespeichert ist, mit der die Bildblöcke des Referenzbildes mit den entsprechenden Bildblöcken der Folgebilder verglichen werden. Diese Vergleichsfunktion kann z.B. eine Vielzahl von Werten, insbesondere von Frequenzwerten liefern, die allenfalls einer Wichtung unterzogen werden. Diese Werte der Vergleichsfunktion sind die Grundlage für die Entscheidung, ob ein Block eines Folgebildes in die Differenzmaske aufgenommen wird. Der Komparator 10 weist noch einen weiteren Speicher 24 auf, in welchem Speicher Vergleichskriterien und/oder Grenzwerte und/oder Schwellwerte gespeichert sind, mit denen die, mit der Vergleichsfunktion festgestellten Unterschiede bewertet werden. Diese Bewertung ist letztlich dafür entscheidend, ob ein Block eines Folgebildes in die Differenzmaske eingebaut wird oder nicht.

Sowohl der Speicher 23 als auch 24 umfasst eine Anzahl von Parametern, die der Vergleichsfunktion bzw. den Vergleichskriterien zugrundegelegt werden und in Anpassung an die jeweilige Praxissituation abgeändert werden können. Mit der Abänderung dieser Parameter kann der Einsatzzweck der erfindungsgemäßen Einrichtung an unterschiedliche Anwendungsfälle angepasst werden.

Über eine entsprechende Datenleitung D können eintreffende Referenzbilder und/oder Differenzmasken so wie sie eintreffen in JPEG-Kodierung und gegebenenfalls in einer Einheit 21 mit einem JPEG-Header versehen, in einem Speicher 22 abgespeichert werden.

Die mit den Differenzmasken erstellten neuen Folgebilder können in einer Bildanzeigeeinheit 19 dargestellt werden; in einer Auswerteeinrichtung 20 kann eine optische oder andere Auswertung folgen.

Die Differenzmasken umfassen lediglich Blöcke bzw. Bildbereiche, die sich vom Referenzbild unterscheiden; die restlichen Teile der Differenzmaske sind transparent.

Bei einer diskreten Cosinus-Transformation (DCT) wird eine Matrix im Frequenzraum abgebildet, d.h., es entsteht eine neue Matrix, deren Koeffizienten die Amplitude der jeweiligen Frequenzen sind.

Die Verarbeitung der Bilddaten erfolgt in den Einrichtungen 1 und 2 in Echtzeit, d.h. es vergeht zwischen dem Anlegen der Eingangsdaten und dem Erhalt gültiger Ausgangsdaten nur eine sehr geringe Zeitspanne; der Wert der maximal tolerierten Zeitspanne liegt in der Größenordnung von Millisekunden. Für die Einrichtungen 1 und 2 bedeutet dies, dass diese Zeitspanne in der Größenordnung der Aufnahme der einzelnen Bilder, d.h. in der Größenordnung von etwa 1/25-Sekunde, liegt.

An sich können auch andere Komprimierungsverfahren als die Huffman-Komprimierung angewendet werden; es könnte auch eine arithmetische Komprimierung erfolgen.

Besonders vorteilhaft läßt sich die erfindungsgemäße Vorgangsweise verwirklichen, wenn die Bilder gemäß JPEG-Spezifikation ausschließlich für Farb- bzw. Schwarz-Weiß-Bilder eingesetzt werden und/oder die JPEG-Standard als YCrCb-Bilder (Dreikanal) mit nicht adaptiver Huffman-Komprimierung kodiert werden.

Der Vergleich der Folge-Bilder mit dem Referenzbild kann in Hinblick auf die Blöcke erfolgen, in die das Referenzbild und die Folge-Bilder zerlegt wurden, wobei ein Block als der kleinste quadratische Bereich (8 x 8 Pixel) einer Farbebene zu betrachten sind und die zentrale und kleinste zusammengehörige Einheit einer Farbebene in der JPEG-Kodierung darstellt. An sich könnte auch ein Vergleich von MCUs erfolgen, die die kleinste Einheit der Bilder (für alle Farbebenen) darstellen, die für sich selbst dekodiert werden können. Eine derartige MCU besteht zumeist aus einem oder mehreren (2 x 2) Luminanzblöcken und je einem Chromablock der beiden Chrominanzebenen.

Unter Navigationsblöcken werden gemäß JVS Spezifikation Informationen über die Bildgeometrie, z.B. Breite, Höhe, Farbtiefe, Datum und Zeitangaben sowie Verweise auf Index-Frame verstanden.

Unter einer Run Length Codierung (RCL) wird eine Lauflängenkodierung verstanden, bei der bei einer Folge von Daten zu jedem Element die Anzahl der Wiederholungen dieses Elementes gespeichert wird, womit besonders bei Daten, die sich oft wiederholen, eine hohe Datenreduktion erreicht werden kann.

Zweckmäßigerweise kann vorgesehen sein, dass für Rand-Blocks eine Field Dilation erfolgt, d.h., dass Rand-Blocks in der Differenzmaske gemäß vorgesehenen Nachbarschaftsbedingungen jeweils benachbarte DCT-Blöcke zugeordnet werden, auch wenn diese benachbarten Blöcke das vorgegebene Vergleichskriterium nicht erfüllt haben und somit nicht übertragen werden würden. Auf diese Weise kann man jedoch die Qualität der übertragenen Bilder beträchtlich steigern.

## Patentansprüche

1. Verfahren zur Übertragung von vorzugsweise quasistatischen Bildfolgen, insbesondere zur Übertragung von mit einem elektronenoptischen Aufnahmegerät, vorzugsweise einer Videokamera, aufgenommenen oder datentechnisch generierten, im Standard JPEG-Format kodierten und komprimierten, vorzugsweise Huffmann-komprimierten, Bildern, vorzugsweise von mittels Überwachungskameras aufgenommenen quasistatischen Bildfolgen mit sich wenig verändernden Bildinhalten, **dadurch gekennzeichnet,**
- **dass** mit dem Aufnahmegerät ein Referenzbild aufgenommen, gespeichert und zum Empfangsort übertragen wird,
- **dass** die Bildinhalte bzw. -merkmale des gespeicherten Referenzbildes mit den Bildinhalten bzw. -merkmalen von zumindest einem, vorzugsweise einer Anzahl von, vorteilhafterweise unmittelbar nachfolgend aufgenommenen Folge-Bild(ern) verglichen werden, wobei das (die) jeweils JPEG-kodierte(n) und vorzugsweise Huffman-komprimierte(n) Folge-Bild(er) auf die Komprimierungsebene der vorzugsweise gewichteten DCT-Blöcke dekomprimiert und mit dem zuvor ebenfalls auf die Komprimierungs-Ebene der vorzugsweise gewichteten DCT-Blöcke dekomprimierten Referenz-Bild verglichen wird (werden),
- **dass** mit den gegenüber dem Referenzbild als unterschiedlich bewerteten Bildbereichen bzw. -merkmalen des (der) Folge-Bildes(r) eine Differenzmaske erstellt wird und
- **dass** anstelle des jeweiligen gesamten Folge-Bildes lediglich die für dieses Folge-Bild erstellte Differenzmaske nach JPEG-Kodierung und Komprimierung, vorzugsweise Huffman-Komprimierung, zum Empfangsort übertragen wird.

2. Verfahren nach Anspruch 1, **dadurch gekennzeichnet, dass** nach Übertragung der bzw. jeder Differenzmaske zum Empfangsort der dem Bildbereich der Differenzmaske entsprechende Bildbereich eines übertragenen, insbesondere des zuletzt übertragenen Referenzbildes durch den die als unterschiedlich bewerteten Bildbereiche bzw.-merkmale des Folge-Bildes enthaltenden Bildbereich der Differenzmaske ersetzt wird.

3. Verfahren nach Anspruch 1 oder 2, **dadurch gekennzeichnet, dass** die Referenzbilder und die Differenzmasken im Streaming-Format, vorzugsweise zwischenspeicherungsfrei, sofort nach Erstellung bzw. Abschluß der Komprimierung übertragen bzw. weitergeleitet werden, wobei die Übertragung der Referenzbilder und der Differenzmasken vorteilhafterweise im JVS-Protokoll erfolgt.

4. Verfahren nach einem der Ansprüche 1 bis 3, **dadurch gekennzeichnet, dass** in Abhängigkeit von Veränderungen der Bildmerkmale des Referenzbildes und/oder von der Anzahl der gesendeten Differenzmasken und/oder von der seit der Übertragung des Referenzbildes verstrichenen Zeitspanne od.dgl. Parametern ein neues Referenzbild aufgenommen und übertragen und für den Vergleich mit nachfolgend aufgenommenen Folge-Bildern herangezogen wird.

5. Verfahren nach einem der Ansprüche 1 bis 4, **dadurch gekennzeichnet, dass** die Differenzmaske durch selektive Blockdifferenz des Referenzbildes und des jeweiligen nachfolgend aufgenommenen Folge-Bildes erstellt wird, indem einander, insbesondere lagemäßig und/oder bildstrukturmäßig, entsprechende Bildbereiche bzw. -blöcke des Referenzbildes und des Folge-Bildes unter Einsatz einer Vergleichsfunktion verglichen werden und nur diejenigen Blöcke des Folge-Bildes in die Differenzmaske übernommen werden, in denen die Abweichung bzw. der Unterschied der Bildmerkmale gegenüber den Bildmerkmalen in den Blöcken des Referenzbildes als signifikant, insbesondere gegenüber einem Vergleichskriterium, beurteilt wird.

6. Verfahren nach einem der Ansprüche 1 bis 5, **dadurch gekennzeichnet, dass** beim Vergleich des Referenzbildes mit dem jeweiligen Folge-Bild die vorteilhafterweise gewichteten Koeffizienten jedes DCT-Blockes oder jeder MCU der beiden Bilder miteinander verglichen und in Abhängigkeit von einem Vergleichskriterium bzw. Schwellwert die Merkmalswerte des jeweiligen DCT-Blockes bzw. der jeweiligen MCU in die Differenzmaske eingetragen werden.

7. Verfahren nach einem der Ansprüche 1 bis 6, **dadurch gekennzeichnet, dass** zum Vergleich des Referenzbildes mit einem Folge-Bild die Differenz, die Summe oder eine andere Funktion der Koeffizienten der DCT-Blöcke oder der MCU des Referenzbildes und des jeweiligen Folge-Bildes ermittelt werden.

8. Verfahren nach Anspruch 7, **dadurch gekennzeichnet, dass** die erhaltenen Differenzen gewichtet werden, wobei niedrige Frequenzen vorzugsweise höheres Gewicht erhalten und/oder Luminanzkanäle höher bewertet bzw. gewichtet werden als Chrominanzkanäle und/oder hohe Chrominanzfrequenzen unberücksichtigt bleiben.

9. Verfahren nach Anspruch 8 oder 9, **dadurch gekennzeichnet, dass** die Summe der gewichteten Differenzen zumindest eines DCT-Blockes oder einer MCU mit einem vorgegebenen oder insbesondere von der gewünschten Bildqualität oder Übertragungskapazität abhängigen Grenzwert verglichen wird.

10. Verfahren nach einem der Ansprüche 1 bis 9, **dadurch gekennzeichnet, dass** die Differenzmaske in einer Größe von einer Vielzahl von DCT-Blöcken erstellt wird, insbesondere die Bildbreite und die Bildhöhe der Differenzmaske ein Vielfaches der Breite und Höhe eines DCT-Blockes beträgt.

11. Verfahren nach einem der Ansprüche 1 bis 10, **dadurch gekennzeichnet, dass** am Empfangsort die Referenzbilder und die Differenzmasken auf die Komprimierungsebene der vorzugsweise gewichteten DCT-Blöcke dekomprimiert werden und auf dieser Komprimierungsebene die entsprechenden DCT-Blöcke oder MCUs des Referenzbildes durch die DCT-Blöcke oder MCUs der Differenzmaske ersetzt werden.

12. Verfahren nach einem der Ansprüche 1 bis 11, **dadurch gekennzeichnet, dass** das mit dem Referenzbild und mit den DCT-Böcken bzw. MCUs der Differenzmaske erstellte Bild zur Anzeige gebracht wird oder komprimiert, vorzugsweise Huffmann-komprimiert, und gegebenenfalls mit einem JPEG-Header versehen abgespeichert wird.

13. Verfahren nach einem der Ansprüche 1 bis 12, **dadurch gekennzeichnet, dass** der Vergleich zwischen Referenzbild und dem jeweiligen Folge-Bild in Echtzeit, d.h. in der zwischen der Aufnahme eines Bildes und Absenden der zugehörigen Differenzmaske liegenden Zeitspanne, vorteilhafterweise während einer Zwischenspeicherung des als nächstes aufgenommenen Folge-Bildes erfolgt und dass auch die Erstellung der Differenzmasken in Echtzeit erfolgt.

14. Einrichtung zur Übertragung von vorzugsweise quasistatischen Bildfolgen, insbesondere zur Übertragung von mit einem elektronenoptischen Aufnahmegerät (4), vorzugsweise einer Videokamera, aufgenommenen oder datentechnisch generierten, im Standard JPEG-Format kodierten und komprimierten, vorzugsweise Huffmann-komprimierten, Bildern, vorzugsweise von mittels Überwachungskameras aufgenommenen quasistatischen Bildfolgen mit sich wenig verändernden Bildinhalten, insbesondere zur Durchführung des Verfahrens nach einem der Ansprüche 1 bis 13, **dadurch gekennzeichnet,**
- **dass** die Einrichtung einen Dekoder (9) aufweist, in dem ein aufgenommenes Referenzbild und jeweils nachfolgend aufgenommene JPEG-kodierte und komprimierte, vorzugsweise Huffman-komprimierte, Folge-Bilder auf die Komprimierungsebene der vorzugsweise gewichteten DCT-Blöcke dekomprimierbar sind,
- **dass** dem Dekoder (9) ein Komparator (10) nachgeordnet ist, in dem das dekomprimierte Referenzbild mit zumindest einem nachfolgend aufgenommenen auf dieselbe Ebene dekomprimierten Folge-Bild verglichen wird,
- **dass** dem Komparator (10) ein Differenzmaskenbildner (12) zur Erstellung einer Differenzmaske zugeordnet ist, in die beim Vergleich des Referenzbildes mit dem jeweiligen Folge-Bild als unterschiedlich bewerteten Bildbereiche bzw. DCT-Blöcke oder MCUs des jeweiligen Folge-Bildes eingeschrieben werden,
- **dass** ein JPEG-Kodierer bzw. Komprimierer (13), vorzugsweise Huffman-Komprimierer, für die Differenzmaske vorgesehen ist und
- **dass** von der Einrichtung (1) das jeweilige Referenzbild und die von den jeweiligen Folge-Bildern abgeleiteten Differenzmasken zur Übertragung an den Empfangsort im Standard-JPEG-Format kodiert und komprimiert, vorzugsweise Huffmann-komprimiert, bereitgestellt werden.

15. Einrichtung nach Anspruch 14, **dadurch gekennzeichnet,**
- **dass** an die Einrichtung (1) eine Empfangseinheit (2) angeschlossen ist, die einen Dekoder (16) für einlangende Referenzbilder und Differenzmasken aufweist, in dem die einlangenden Referenzbilder und Differenzmasken auf die Komprimierungsebene der vorzugsweise gewichteten DCT-Blöcke dekodierbar sind und
- **dass** dem Dekoder (16) eine Substitutionseinheit (18) zugeordnet ist, in der die mit der Differenzmaske übertragenen Bildbereiche bzw. DCT-Blöcke oder MCUs der jeweiligen Folge-Bilder anstelle der entsprechenden Bildbereiche bzw. DCT-Blöcke oder MCUs des insbesondere zuletzt übertragenen Referenzbildes gesetzt werden.

16. Einrichtung nach Anspruch 14 oder 15, **dadurch gekennzeichnet, dass** in dem Komparator (10) die Summe der gewichteten Differenzen der DCT-Blöcke oder MCUs des Referenzbildes und eines Folge-Bildes verglichen und bewertet wird.

17. Einrichtung nach einem der Ansprüche 14 bis 16, **dadurch gekennzeichnet, dass** die Einrichtung (1) und die Empfangseinheit (2) eine gegebenenfalls jeweils eigene Steuereinheit (7, 8) umfassen für zumindest eine der folgenden Funktionen:
- Übernahme der aufgenommenen, JPEG-kodierten Bilder mit Zeitstempel und Zuordnung von Protokolldaten,
- Selektion bzw. Übertragung von Referenzbildern nach einstellbaren Parametern, z.B. Zeitdauer,
- Steuerung der Komprimierungsalgorithmen,
- Speicherung des Referenzbildes und/oder der Differenzmaske im JVS-Protokoll,
- Erstellung von Protokollstatus, Protokoll-Steuerdaten, insbesondere im JVS-Protokoll, insbesondere in der Form von Statusblöcken und Navigationsblöcken,
- Erkennung und Aufteilung von Daten entsprechend dem JVS-Prodokoll im Empfangsbereich,
- Resynchronisation mit JVS-Protokoll-Daten bzw. Übertragungsmodi,
- Aktualisierung des dargestellten Referenzbildes,
- Steuerung des Dekomprimierungsalgorithmus in der Empfangseinheit und/oder
- Bereitstellung von vervollständigten Referenzbildern, allenfalls im Zusammenhang mit Datums- und Zeitangaben.

18. Einrichtung nach einem der Ansprüche 14 bis 17, **dadurch gekennzeichnet, dass** der Komparator (10) einen insbesondere programmierbaren Speicher (23) aufweist, in dem die Vergleichsfunktion abgespeichert ist, mit der die Unterschiede zwischen den Bildblöcken der Referenzbilder und der Folge-Bilder ermittelt werden.

19. Einrichtung nach einem der Ansprüche 14 bis 18, **dadurch gekennzeichnet, dass** der Komparator (10) einen insbesondere programmierbaren Speicher (24) umfasst, in dem die Vergleichskriterien und/oder Grenzwerte und/oder Schnellwerte für die Beurteilung der Unterschiede zwischen den Bildblöcken des Referenzbildes und der Folge-Bilder abgespeichert sind.
